(19) Europäisches Patentamt
European Patent Office
Office européen des brevets

(11) **EP 1 000 675 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.[7]: **B21C 23/14**, B21K 25/00, H01R 25/14, B60M 1/30

(21) Anmeldenummer: **99810959.9**

(22) Anmeldetag: **21.10.1999**

(54) **Stromschiene, deren Verwendung sowie Verfahren zu ihrer Herstellung**

Conductor rail, its use and method for its manufacture

Barre conductrice, son utilisation et procédé pour sa fabrication

(84) Benannte Vertragsstaaten:
**AT BE CH CY DE DK ES FI FR GB GR IE IT LI LU MC NL PT SE**

(30) Priorität: **02.11.1998 DE 19850349**
**10.12.1998 DE 19857115**

(43) Veröffentlichungstag der Anmeldung:
**17.05.2000 Patentblatt 2000/20**

(73) Patentinhaber: **Alcan Technology & Management AG**
**8212 Neuhausen am Rheinfall (CH)**

(72) Erfinder:
• **Herrmann, Stephan**
**78224 Singen/Bohlingen (DE)**
• **Bock, Uwe**
**78224 Singen (DE)**

(56) Entgegenhaltungen:
GB-A- 329 717     US-A- 3 730 310
US-A- 5 061 829

• **PATENT ABSTRACTS OF JAPAN vol. 005, no. 189 (M-099), 28. November 1981 (1981-11-28) -& JP 56 108316 A (HITACHI CABLE LTD), 27. August 1981 (1981-08-27)**

**Beschreibung**

Die Erfindung betrifft eine Stromschiene mit einem schienenartigen Tragprofil aus einem Eisenwerkstoff mit einem Tragprofil C-oder I-förmigen Querschnittes, der zumindest eine Profilkomponente aus einem anderen Metall zugeordnet ist. Zudem erfasst die Erfindung eine Verwendung der Stromschiene sowie ein Verfahren zu ihrer Herstellung.

Ein Verbundprofil mit einem Tragprofil oder Tragkörper aus einem Leichtmetallwerkstoff als Profilkomponente und wenigstens einem mit diesem während eines Strangpressvorganges metallisch verbundenen Profilband aus einem anderen Metall höherer Abriebfestigkeit ist der EP 0 677 338 A1 zu entnehmen. Es werden querschnittlich I-förmige Verbundprofile aus einem Schienenfuß, einem Schienenhals und einem Schienenkopf beschrieben, wobei der Schienenkopf durch ein die Profillängsachse querendes Bandprofil abgedeckt ist; letzteres bietet eine Schleifebene für es berührende Stromabnehmer an. Dieses Verbundprofil wird aus einer Aluminiumlegierung auf dem Wege des Strangpressens in einem Arbeitsgang hergestellt, während dessen auch jenes Bandprofil angefügt wird.

Die US-A-5 061 829 beschreibt eine Verbundstromschiene in Form eines Strangpressprofils aus Aluminium als Trägerprofil, einem Verbundprofil aus Aluminium und einem Stahlband als Lauffläche für Stromschleifschute.

Aus der DE 24 32 541 A1 ist ein Verfahren zum Herstellen von Stromschienen aus einem Trägerprofil und mindestens einer wenigstens einen Teil der Oberfläche des Trägerprofils bildenden Auflage aus Profilband eines anderen Metalls bekannt. Auch hier wird während eines Strangpressvorganges wird das Trägerprofil durch Auspressen eines Blockes durch den Formgebungsquerschnitt einer Matrize erzeugt; gleichzeitig durchläuft das Profilband zur Matrizenlängsachse parallel den Matrizendurchbruch oder Formgebungsquerschnitt. Um zudem eine ausreichende Verbindung zwischen Trägerprofil und Profilband bei Verwendung nicht vorplattierter Bänder zu gewährleisten, werden mindestens zwei Verbundprofile gleichzeitig erzeugt; die mit den Auflagen zu versehenden Bereiche der Trägerprofile stehen einander gegenüberund werden mit paarweise aufeinanderliegenden Profilbändern durch den Formgebungsquerschnitt geführt.

Obwohl neue Fahrleitungsanlagen -- im Hinblick auf deutlich bessere elektrische Leitwerte - verstärkt mit Aluminium/Stahl-Verbundschienen ausgestattet werden, ist nach wie vor der größere Teil der auf etwa 11.000 km zu schätzenden Wegstrecken vor allem von Untergrundbahnen und sog. Light Mail Vehicles zur Elektrifizierung durch Stromschienen mit aus Weicheisen geformten Stahlstromschienen versehen.

Im Falle einer Anlagennachrüstung muss heute die komplette Stromschiene ausgetauscht werden, was einen Anlagenstillstand und deshalb -- neben den Anschaffungs- und Installationskosten -- auch hohe Ausfallkosten verursacht.

In Kenntnis dieses Standes der Technik hat sich der Erfinder das Ziel gesetzt, die Nachrüstung stählerner Stromschienen zu ermöglichen; die gesamte Stromschienenanlage soll -- beispielsweise während nächtlicher Stillstandszeiten und ohne aufwendige Montagearbeiten -- mit einer bedarfsgerecht bereitgestellten Profilschiene nachgerüstet zu werden vermögen. Zudem soll das Ensemble aus Stromschiene und Profilschiene auch zur Erstausstattung eingesetzt werden können.

Zur Lösung dieser Aufgabe führt die Lehre der unabhängigen Patentansprüche; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist in wenigstens einer in dem -- aus einem Eisenwerkstoff, insbesondere Weicheisen, bestehenden --Schienen- oder Tragprofil parallel zu dessen Längsachse verlaufenden Flankenrinne ein Leichtmetallkörper, insbesondere ein stranggepresstes Profil aus einer Aluminiumlegierung, als Leitprofil festgelegt, dessen in Einbaulage nach aussen weisende Oberfläche -- zumindest abschnittsweise -von der Profilkomponente aus einem Metall höherer Festigkeit überspannt wird.

Nach anderen Merkmalen der Erfindung weist wenigstens eine der seitlichen Flankenflächen des Leichtmetallkörpers jenes Leitprofils eine Sägezahnprofilierung auf oder sie ist mit Längsrippen versehen, die einen rinnenartigen Querschnitt dieser Flankenfläche bestimmen.

Für sich querschnittlich zu einem Profilsteg des Tragprofils hin verjüngende Flankenrinnen soll sich vorteilhafterweise der trapezartige Querschnitt des Leichtmetallkörpers zu seiner Rückenfläche hin verjüngen, wobei die Mittellinie für den Querschnitt des Leitprofils bevorzugt dessen Symmetrielinie ist.

Ein solches Leitprofil -- für dessen Ausgestaltung und Verwendung selbständig Schutz begehrt wird -- ermöglicht das Nachrüsten der weithin üblichen Weicheisen-I-Profile, die beidseits ihres Steges jeweils eine von ihren Flanschen begrenzte Flankenrinne aufweisen, ohne aufwendige Bohr- und Schraubarbeiten; der querschnittlich der Flankenrinne angepasste Leichtmetallkörper kann formschlüssig in die Flankenrinne eingefügt werden und sitzt in ihr bevorzugt mit Presssitz. Zudem hat es sich als günstig erwiesen, das Leitprofil mit dem Tragprofil thermisch zu verbinden. Zum einen kann beim Erzeugen des Presssitzes ein Kaltverschweissen erfolgen, zum anderen ist es möglich, die Lage des Leitprofils durch Schweißpunkte zu sichern; durch letztere wird die Profilkomponente aus dem schwereren Metallwerkstoff -- vornehmlich ein Stahlband -- an das Tragprofil angeschlossen.

Dank der Erfindung wird also für die im Einsatz befindlichen Stahlstromschienen -- etwa nach Standard DIN 43 156 -ein passgenaues Profil aus A1 99,5 od. dgl. Legierungswerkstoff mit profilierten Flankenflächen angeboten, das dann an der Strecke mit einer entsprechend gestalteten Hydraulik-Vorrichtung in die Stahlstromschiene gepresst werden kann. Dabei werden die Profilrillen des Aluminiums verquetscht; im Idealfall entsteht eine Kaltverschweißung zwischen dem Weicheisen der Stromschiene und dem nachgerüsteten Zusatzleitwerkstoff.

Erfindungsgemäß kann der Leichtmetallkörper des Leitprofils von seiner dem Rinnentiefsten zugeordneten Rückenfläche her mit einem Sackschlitz zum Toleranzausgleich versehen sein; hierzu mag in den Leichtmetallkörper eine Entlastungsnut eingepresst oder ein Längsschlitz eingefräst werden. In beiden Fällen erreicht man durch das Einbringen der querschnittsveränderbaren Pressnut eine Verbesserung des Presssitzes, dies auch alternativ zu den Oberflächenprofilierungen.

Die in das Leitprofil integrierte Stahlabdeckung, welche bevorzugt durch einen Strangpressvorgang intermetallisch mit dem Leichtmetallkörper verbunden ist, soll - wie beschrieben -- das problemlose Verschweissen von Leitprofil und Tragprofil ermöglichen. Diesen Effekt kann man auch dadurch erreichen, dass die Profilkomponente aus dem Metall höherer Abriebfestigkeit ein rinnenartig geformtes Stahlblech ist und zwei seitliche Rinnenschenkel des Stahlbleches schulterartigen Absätzen des Leichtmetallkörpers klemmend aufliegen. In beiden Ausgestaltungen ist es günstig, wenn die Seitenflächen des Tragprofils bzw. seiner Flansche mit der freien Oberfläche der Profilkomponente etwa fluchten.

Der Stromübergang findet bei dem System aus Stromschiene und seitlich angeordnetem Leitprofil an den Seitenflächen des in der Art eines Keiles eingepressten Leitprofils statt. Der elektrische Widerstand der Stromschiene kann nach ersten Berechnungen um über 50 % gesenkt und damit in den Bereich neuer Aluminium/Stahl-Verbundstromschienen gebracht werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1: eine schematisierte Draufsicht auf eine Schienenanlage mit seitlicher Verbundstromschiene;

Fig. 2: eine gegenüber Fig. 1 vergrößerte Stirnansicht einer Verbundstromschiene;

Fig. 3: einen vergrößerten Ausschnitt aus Fig. 2 nach deren Pfeil III;

Fig. 4 bis Fig. 6: Querschnitte durch drei unterschiedliche Nachrüstprofile für die Verbundstromschiene;

Fig. 7: eine Schrägsicht auf einen Abschnitt einer weiteren -- axial halbiert dargestellten -- Verbundstromschiene;

Fig. 8: die Draufsicht auf ein streifenartiges Element der Fig. 7.

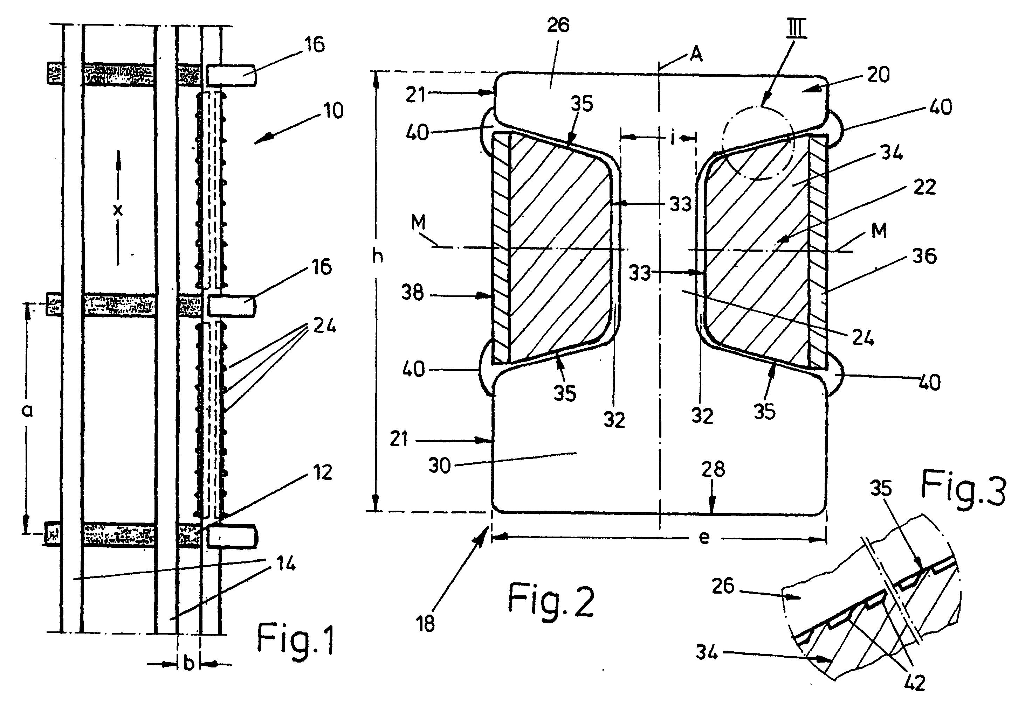

Bei einer in Fig. 1 skizzierten Schienenanlage 10 ist auf-- in Abständen a von etwa 500 cm -- parallel zueinander liegenden Schwellen 12 ein Paar von diese kreuzenden Fahrschienen 14 montiert. Neben der in Fahrtrichtung x rechten Fahrschiene 14 verläuft in geringem lichtem Abstand b eine auf Supporten 16 höhenversetzt ruhende Verbundstromschiene 18 aus einem Stahlprofil 20 sowie in dieses beidseits eingepressten Leitprofilen 22. Bei dem Stahlprofil 20 kann es sich um eine Stromschiene aus Stahl nach DIN 43 156 - A5100 der Breite e von 80 +/- 1,5 mm und der Höhe h von 105 +/-1,5 mm handeln, auf die hier Bezug genommen wird.

Das Stahlprofil 20 I-förmigen Querschnitts weist an beiden Seiten eines -- in Fig. 2 senkrecht verlaufenden -- Steges 24 der Breite i von hier 18 mm jeweils eine von einem Firstflansch 26 und einem -- eine untere Schleiffläche 28 anbietenden -- Sockelflansch 30 begrenzte Flankenrinne 32 auf, die sich vom Steg 24 weg querschnittlich konisch erweitert.

Jedes der beiden in Fig. 2 erkennbaren Leitprofile 22 ist ein Verbundprofil aus einem querschnittlich als Trapez ausgeformten Leichmetallkörper 34 (Werkstoff hier: Al 99,5) sowie einem während eines Strangpressvorganges an diesen angeformten Stahlband 36. Der Querschnitt dieses Leichtmetallkörpers 34 entspricht dem sich zu seiner -- parallel zu seiner Querschnittachse A des Stahlprofils 20 vorhandenen-- Rückenfläche 33 keilartig verjüngenden Querschnitt jener Flankenrinne oder -mulde 32; in letztere wird das Leitprofil 22 so eingefügt, dass die Oberfläche 38 des Stahlbands 36 mit den angrenzenden seitlichen Aussenflächen 21 des als Tragprofil dienenden Stahlprofils 20 etwa fluchtet. Dann wird letzteres mit den Seitenprofilen 22 durch -- bei 40 angedeutete -- Schweisspunkte verbunden. Es sei hier darauf hingewiesen, dass das Leitprofil 22 in die Flankenrinne 32 eingepasst ist, seine Abstände zu den benachbarten Rinnenkonturen in Fig. 2 also überhöht dargestellt sind.

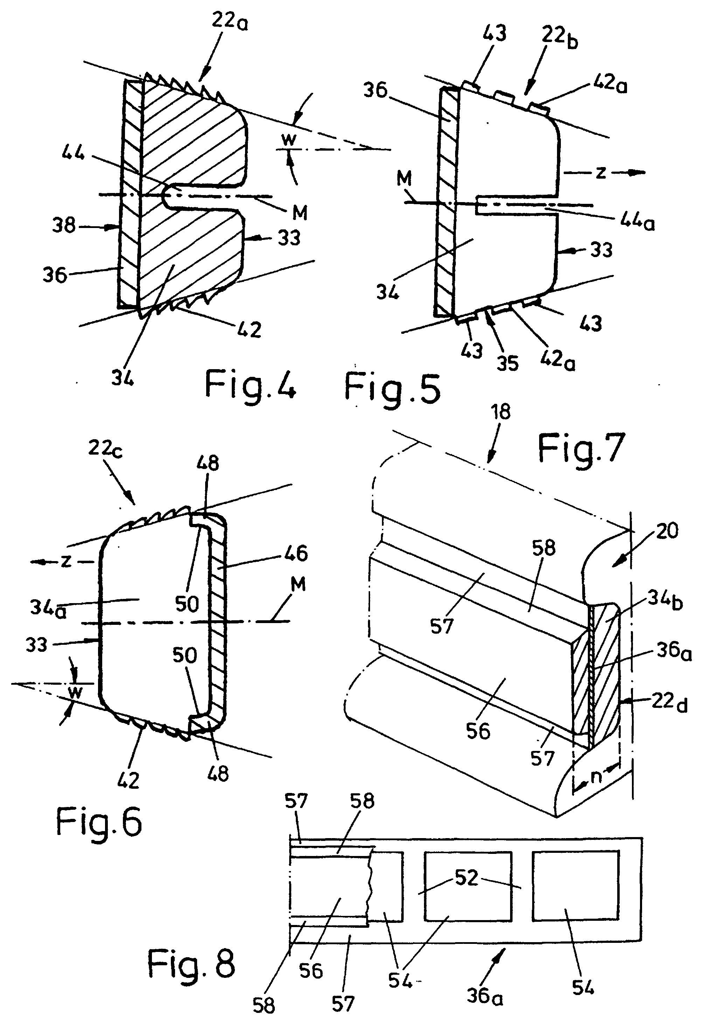

Die beiden -- in einem Winkel w zur Mittellinie M des Leitprofils 22 geneigten -- Flankenflächen 35 des Leichtmetallkörpers 32 sind bevorzugt mit einem Sägezahnprofil 42 ausgestattet, das in Fig. 3 dargestellt ist. Die Verbundprofile 22a bzw. 22b der Fig. 4, 5 weisen in der Mittellinie M eine eingepresste Entlastungsnut 44 bzw. einen eingefrästen Längsschlitz 44a als Toleranzausgleich auf. Beim Verbundprofil 22b sind statt der beschriebenen -- mit in Einschubrichtung z gerichtete Außenkanten aufweisenden --Sägezahnprofile 42 Längsrippen 43 einer querschnittlich rinnenartigen Feder-Profilierung 42a zu erkennen.

Das in Fig. 6 gezeigte Leitprofil 22c besteht aus einem Leichtmetallkörper 34a, an dem ein querschnittlich rinnenartiges Stahlblech 46 angebracht ist; dieses wird mit seinen aus der Fläche aufgekanteten kurzen Rinnenschenkeln 48 auf schulterartige Absätze 50 des Leichtmetallkörpers 34a so aufgeklemmt, dass die Rinnenschenkel 48 an die Endbereiche der Sägezahnprofile 42 anschließen.

Das Leitprofil 22d der Fig. 7 weist einen Leichtmetallkörper 34b der Breite n auf, an den ein leiterartig ausgebildeter, zwischen Sprossen 52 mit Fensterausnehmungen 54 versehenes Stahlband 36a angefügt ist; die Fensterausnehmungen 54 werden von einem vor dem Stahlband 36a verlaufenden zweiten Querschnittsabschnitt 56 des Leichtmetallkörpers 34b durchgriffen. Entlang dessen Längskanten sind freiliegende Sichtstreifen 57 des Stahlbandes 36a zu erkennen. An diesen werden in Einbaulage die Schweißpunkte 40 angesetzt.

Der besseren Übersicht halber wird nachfolgend eine beispielhafte Nachrüstlösung für Stromschienen bei einer U-Bahn mit Stahlstromschiene 20 ("Third Rail"), einer Stromeinspeisung in Abständen von 5.000 m und einem Support 16 für die Stromschiene 20 in Abstand a von 500 cm dargestellt:

•   Widerstand der Stahlstromschiene: Rs = 23 mΩ/km;
•   Widerstand der nachgerüsteten Lösung:

$$A_S = 5.100 \text{ mm2 (Weicheisen,} \qquad \approx 0{,}1173 \ \frac{\Omega mm^2}{m});$$

$$R_S = 23 \ \mu\Omega/m \text{ für "Alte Stromschiene";}$$

$$A_{Al} = 2.500 \text{ mm2 (Al 99,5,} \qquad = 0{,}028 \ \frac{\Omega mm^2}{m})$$

$$R_{Al} = 11{,}2 \ \mu\Omega/m \text{ für Al-Querschnitt;}$$

$$A_{SB} = 440 \text{ mm2 (Stahlband,} \qquad \approx 0{,}25 \ \frac{\Omega mm^2}{m})$$

$$R_{SB} = 568{,}2 \ \mu\Omega/m \text{ für Stahlband;}$$

$$\frac{1}{R_N} = \frac{1}{R_S} + \frac{1}{R_{Al}} + \frac{1}{R_{SB}} = R_N = 7{,}43 \ \mu\Omega/m$$

Dabei werden die Supporte und Verbinder ≈ 20 % mit $R_S$ sowie die nachgerüstete Länge ≈ 80 % mit $R_N$ angenommen.

Für eine Strecke von 1 = 5.000 m gilt also:

•   ohne Nachrüstung:

$$R = 5.000 \text{ m x } 23 \ \mu\Omega/m$$

$$= 0{,}115 \ \Omega$$

•   mit Nachrüstung:

$$R1 = 1.000 \text{ m} \times \mu\Omega/\text{m}$$

$$= 0{,}023 \ \Omega$$

$$R2 = 4.000 \text{ m} \times 7{,}43 \ \mu\Omega/\text{m}$$

$$= 0{,}030 \ \Omega$$

$$R = 0{,}053 \ \Omega$$

Es zeigt sich, dass mit der Nachrüstlösung der Stromschienenwiderstand um mehr als 50 % gesenkt werden kann. Aus Pv = J2 x R resultieren entsprechend reduezierte Leistungsverluste. Allerdings sind die Energieeinsparungen letztendlich systemabhängig (z.B. von der Ausführung der Einspeisung, Stromrückführung od. dgl.).

**Patentansprüche**

1. Stromschiene mit einem schienenartigen Tragprofil aus einem Eisenwerkstoff mit einem Tragprofil C-oder I-förmigen Querschnitts, der zumindest eine Profilkomponente aus einem anderen Metall zugeordnet ist, wobei in wenigstens einer in dem Tragprofil (20) verlaufenden Flankenrinne (32) als Leitprofil (22, 22a bis 22d) ein Leichtmetallkörper (34, 34a, 34b) mit seine auswärts weisende Oberfläche überspannender Profilkomponente (36, 46) aus einem Metall höherer Festigkeit festgelegt ist, wobei der Leichtmetallkörper (34, 34a, 34b) ein stranggepresstes Profil aus einer Aluminiumlegierung ist.

2. Stromschiene nach Anspruch 1, **dadurch gekennzeichnet, dass** das Leitprofil (22, 22a bis 22c) formschlüssig in die Flankenrinne (32) eingepasst ist.

3. Stromschiene nach Anspruch 1 oder 2, **dadurch gekennzeichnet, dass** der Leichtmetallkörper (34, 34a, 34b) des Leitprofils (22, 22a bis 22d) mit Presssitz in der Flankenrinne (32) sitzt.

4. Stromschiene nach einem der Ansprüche 1 bis 3, **dadurch gekennzeichnet, dass** das Leitprofil (22,22a bis 22d) mit dem Tragprofil (20) thermisch verbunden ist.

5. Stromschiene nach einem der Ansprüche 1 bis 4, **dadurch gekennzeichnet, dass** die Profilkomponente (36, 36a, 46) aus dem Metall höherer Festigkeit mit dem Tragprofil (20) verschweißt, insbesondere punktverschweißt, ist.

6. Stromschiene nach einem der Ansprüche 1 bis 5, **dadurch gekennzeichnet, dass** der Leichtmetallkörper (34, 34a, 34b) des Leitprofils (22, 22a bis 22d) von seiner dem Rinnentiefsten (24) zugeordneten Rückenfläche (33) mit einem Sackschlitz (44, 44a) zum Toleranzausgleich versehen ist.

7. Stromschiene nach Anspruch 6, **gekennzeichnet durch** eine in den Leichtmetallkörper (34, 34a) eingepresste Entlastungsnut (44).

8. Stromschiene nach Anspruch 6, **gekennzeichnet durch** einen in den Leichtmetallkörper (34, 34a) eingefrästen Längsschlitz (44a).

9. Stromschiene nach einem der Ansprüche 1 bis 8, **dadurch gekennzeichnet, dass** wenigstens eine der seitlichen Flankenflächen (35) des Leichtmetallkörpers (34, 34a, 34b) des Leitprofils (22, 22a bis 22d) eine Sägezahnprofilierung (42) aufweist.

10. Stromschiene nach einem der Ansprüche 1 bis 8, **dadurch gekennzeichnet, dass** wenigstens eine der seitlichen Flankenflächen (35) des Leichtmetallkörpers (34, 34a, 34b) des Leitprofils (22, 22a bis 22d) mit Längsrippen (43) versehen ist, die einen rinnenartigen Querschnitt (42a) bestimmen.

11. Stromschiene nach einem der Ansprüche 1 bis 10, **dadurch gekennzeichnet, dass** für eine sich querschnittlich zu einem Profilsteg (24) des Tragprofils (20) hin verjüngende Flankenrinne (32) sich der trapezartige Querschnitt des Leichtmetallkörpers (34, 34a) zu seiner Rückenfläche (33) hin verjüngt.

12. Stromschiene nach Anspruch 11, **dadurch gekennzeichnet, dass** die Mittellinie (M) für den Querschnitt des Leitprofils (22, 22a bis 22d) Symmetrielinie ist.

13. Stromschiene nach einem der Ansprüche 1 bis 12, **dadurch gekennzeichnet, dass** der Leichtmetallkörper (34) mit der seine äussere Oberfläche überspannenden Profilkomponente (36) intermetallisch verbunden ist.

14. Stromschiene nach einem der Ansprüche 1 bis 12, **dadurch gekennzeichnet, dass** die Profilkomponente (46) aus dem Metall höherer Festigkeit ein rinnenartig geformtes Stahlblech ist und zwei seitliche Rinnenschenkel (48) des Stahlbleches schulterartigen Absätzen (50) des Leichtmetallkörpers (34a) klemmend aufliegen.

15. Stromschiene nach einem der Ansprüche 1 bis 14, **dadurch gekennzeichnet, dass** die Seitenflächen (21) des Tragprofils (20) bzw. von dessen Flanschen (26, 30) mit der freien Oberfläche (38) der Profilkomponente (36, 46) etwa fluchten.

16. Stromschiene nach einem der Ansprüche 1 bis 12, **gekennzeichnet durch** zumindest eine in den Leichtmetallkörper (34b) eingebettete Einlage (36a) aus dem Metall höherer Festigkeit, insbesondere zumindest ein Stahlband, das an den Längskanten (58) des Leichtmetallkörpers wenigstens abschnittsweise eine freie Oberfläche (57) anbietet, die in Einbaulage etwa an die Stromschiene (20) angrenzt.

17. Stromschiene nach Anspruch 15, **gekennzeichnet durch** ein in den Leichtmetallkörper (34b) eingebettetes, mit Durchbrüchen (54) versehenes Stahlband (36a), welches an seiner Außenfläche von einem Querschnittsabschnitt (56) des Leichtmetallkörpers so übergriffen ist, dass an den Längskanten (58) des Querschnittsabschnittes Sichtstreifen (57) des Stahlbandes verbleiben.

18. Stromschiene nach Anspruch 1, **dadurch gekennzeichnet, dass** eine aus Eisenwerkstoff geformte Stromschiene (20) C- oder I-förmigen Querschnitts mit einem Leitprofil (22, 22a bis 22d) nachgerüstet ist.

19. Stromschiene nach Anspruch 18, **dadurch gekennzeichnet, dass** die Stromschienen (20) aus Stahl für elektrische Bahnen der Formgebung A-Nennquerschnitt nach DIN 43 156 sind.

20. Verfahren zum Herstellen einer Stromschiene nach einem der Ansprüche 1 bis 17, bei dem das Leitprofil (22, 22a bis 22c) in die Flankenrinne (32) eingepresst und der Leichtmetallkörper (34, 34a) im Bereich seiner Flankenfläche (35) begrenzt verformt wird.

21. Verfahren nach Anspruch 20, **dadurch gekennzeichnet, dass** die Profilierung (42, 42a, 43) des Leichtmetallkörpers (34, 34a) verformt wird.

22. Verfahren nach Anspruch 20 oder 21, **dadurch gekennzeichnet, dass** zwischen der Stromschiene (20) aus Weicheisen und dem Leichtmetallkörper (34, 34a) eine Kaltverschweissung hergestellt wird.

23. Verfahren nach einem der Ansprüche 20 bis 22, **dadurch gekennzeichnet, dass** der Leichtmetallkörper (34, 34a) im Bereich seiner Entlastungsnut (44) oder seines Längsschlitzes (44a) vor dem Einbau aufgeweitet wird.

**Claims**

1. Conductor rail comprising a rail-like supporting section made of a ferrous material and having a C-shaped or an I-shaped cross section with which at least one section component made of another metal is associated, a light metal body (34, 34a, 34b) serving as a conductor section (22, 22a to 22d) being fixed in at least one side channel (32) extending along the supporting section (20) with the section component (36, 46) made of a metal having higher strength covering its outwardly directed surface, the light metal body (34, 34a, 34b) being an extruded section made of an aluminium alloy.

2. Conductor rail according to claim 1, **characterised in that** the conductor section (22, 22a to 22c) is fitted positively into the side channel (32).

3. Conductor rail according to claim 1 or claim 2, **characterised in that** the light metal body (34, 34a, 34b) of the conductor section (22, 22a to 22d) is seated in the side channel (32) with a press fit.

4. Conductor rail according to one of claims 1 to 3, **characterised in that** the conductor section (22, 22a to 22d) is joined thermally to the supporting section (20).

5. Conductor rail according to one of claims 1 to 4, **characterised in that** the section component (36, 36a, 46) made of the metal having higher strength is welded, in particular spot-welded to the supporting section (20).

6. Conductor rail according to one of claims 1 to 5, **characterised in that** the light metal body (34, 34a, 34b) of the conductor section (22, 22a to 22d) is provided from its rear surface (33) associated with the bottom (24) of the channel with a blind slot (44, 44a) for the purposes of tolerance compensation.

7. Conductor rail according to claim 6, **characterised by** a relief groove (44) pressed into the light metal body (34, 34a).

8. Conductor rail according to claim 6, **characterised by** a longitudinal slot (44a) milled into the light metal body (34, 34a).

9. Conductor rail according to one of claims 1 to 8, **characterised in that** at least one of the lateral surfaces (35) of the light metal body (34, 34a, 34b) of the conductor section (22, 22a to 22d) has a sawtooth profile (42).

10. Conductor rail according to one of claims 1 to 8, **characterised in that** at least one of the lateral surfaces (35) of the light metal body (34, 34a, 34b) of the conductor section (22, 22a to 22d) is provided with longitudinal ribs (43) defining a channel-shaped cross section (42a).

11. Conductor rail according to one of claims 1 to 10, **characterised in that**, in the case of a side channel (32) tapering in cross section towards a web (24) of the supporting section (20), the trapezoidal cross section of the light metal body (34, 34a) tapers towards its rear surface (33).

12. Conductor rail according to claim 11, **characterised in that** the centre line (M) of the cross section of the conductor section (22, 22a to 22d) is a line of symmetry.

13. Conductor rail according to one of claims 1 to 12, **characterised in that** the light metal body (34) is joined intermetallically to the section component (36) covering its outer surface.

14. Conductor rail according to one of claims 1 to 12, **characterised in that** the section component (46) made of the metal having higher strength is a channel-shaped steel sheet and two lateral legs (48) of the steel sheet are clamped on to shoulder-like steps (50) on the light metal body (34a).

15. Conductor rail according to one of claims 1 to 14, **characterised in that** the side surfaces (21) of the supporting section (20) or its flanges (26, 30) are substantially aligned with the free surface (38) of the section component (36, 46).

16. Conductor rail according to one of claims 1 to 12, **characterised by** at least one insert (36a) made of the metal having higher strength embedded in the light metal body (34b), in particular at least one steel strip providing a free surface (57) at least in places along the longitudinal edges (58) of the light metal body substantially adjoining the conductor rail (20) in the installation position.

17. Conductor rail according to claim 15, **characterised by** a steel strip (36a) provided with openings (54) embedded in the light metal body (34b), covered on its outer surface by a cross-sectional portion (56) of the light metal body in such a manner that visible strips (57) of the steel strip remain on the longitudinal edges (58) of the cross-sectional portion.

18. Conductor rail according to claim 1, **characterised in that** a conductor section (22, 22a to 22d) is retrofitted to a conductor rail (20) made of ferrous material and having a C-shaped or I-shaped cross section.

19. Conductor rail according to claim 18, **characterised in that** the conductor rails (20) made of steel are for electric railways of A-rated cross section according to DIN 43 156.

20. Process for the production of a conductor rail according to one of claims 1 to 17, in which the conductor section (22, 22a to 22c) is pressed into the side channel (32) and the light metal body (34, 34a) is deformed to a limited extent in the region of its side surface (35).

21. Process according to claim 20, **characterised in that** the profile (42, 42a, 43) of the light metal body (34, 34a) is deformed.

22. Process according to claim 20 or claim 21, **characterised in that** a cold weld is produced between the conductor rail (20) made of soft iron and the light metal body (34, 34a).

23. Process according to one of claims 20 to 22, **characterised in that** the light metal body (34, 34a) is expanded in the region of its relief groove (44) or its longitudinal slot (44a) prior to installation.

**Revendications**

1. Barre conductrice comportant un profilé de support en forme de rail constitué par un matériau ferreux, un profilé de support possédant une section transversale en forme de C ou de I et auquel est associé au moins un composant profilé formé d'un autre métal, et dans laquelle dans au moins une rainure de flanc (32) qui s'étend dans le profilé de support (20) en tant que profilé de guidage (22, 22a à 22d) est fixé un corps en métal léger (34, 34a, 34b), par un composant profilé (36, 46), qui s'étend sur la surface du corps métallique, tournée vers l'extérieur et est réalisé en un métal ayant une résistance accrue, le corps en métal léger (34, 34a, 34b) étant un profilé extrudé en un alliage d'aluminium.

2. Barre conductrice selon la revendication 1, **caractérisée en ce que** le profilé de guidage (22, 22a à 22c) est inséré selon une liaison par formes complémentaires dans la rainure de flanc (32).

3. Barre conductrice selon la revendication 1 ou 2, **caractérisée en ce que** le corps en métal léger (34, 34a, 34b) du profilé de guidage (22, 22a à 22d) est inséré selon un ajustement pressé dans la rainure de flanc (32).

4. Barre conductrice selon l'une des revendications 1 à 3, **caractérisée en ce que** le profilé de guidage (22, 22a à 22d) est relié thermiquement au profilé de support (22).

5. Barre conductrice selon l'une des revendications 1 à 4, **caractérisée en ce que** le composant profilé (36, 36a, 46) formé d'un métal ayant une résistance accrue est soudé, notamment selon un soudage par points, ou un profilé de support (20).

6. Barre conductrice selon l'une des revendications 1 à 5, **caractérisée en ce que** le corps en métal léger (34, 34a, 34b) du profilé de guidage (22, 22a à 22d) comporte une fente borgne (44, 44a) servant à réaliser une compensation de tolérances, qui s'étend à partir de sa face arrière (33) associée à la partie la plus profondeur (24) de la rainure.

7. Barre conductrice selon la revendication 6, **caractérisée par** une rainure de détente (44), qui est formée par emboutissage dans le corps en métal léger (34, 34a).

8. Barre conductrice selon la revendication 6, **caractérisée par** une fente longitudinale (44a), qui est formée par fraisage dans le corps en métal léger (34, 34a).

9. Barre conductrice selon l'une des revendications 1 à 8, **caractérisée en ce qu'**au moins l'une des surfaces latérales de flanc (35) du corps en métal léger (34, 34a, 34b) du profilé de guidage (22, 22a à 22d) possède un profilé en dents de scie (42).

10. Barre conductrice selon l'une des revendications 1 à 8, **caractérisée en ce qu'**au moins l'une des surfaces latérales de flanc (35) du corps en métal léger (34, 34a, 34b) du profilé de guidage (22, 22a à 22d) est pourvue de rainures longitudinales (43), qui déterminent une section transversale (42a) en forme de rainure.

11. Barre conductrice selon l'une des revendications 1 à 10, **caractérisée en ce que** pour une rainure de flanc (32), qui se rétrécit en coupe transversale en direction d'une barrette (24) du profilé de support (20), la section transversale de forme trapézoïdale du corps en métal léger (34, 34a) se rétrécit en direction de sa face arrière (33).

**12.** Barre conductrice selon la revendication 11, **caractérisée en ce que** la ligne médiane (M) pour la section transversale du profilé de guidage (22, 22a à 22d) est un axe de symétrie.

**13.** Barre conductrice selon l'une des revendications 1 à 12, **caractérisée en ce que** le corps en métal léger (34) est relié selon une liaison intermétallique au composant profilé (36) qui s'étend sur la surface extérieure de ce corps.

**14.** Barre conductrice selon l'une des revendications 1 à 12, **caractérisée en ce que** le composé profilé (46) formé du métal ayant une résistance accrue, est une tôle d'acier agencée en forme de rainure, et côtés latéraux (48) de la rainure de la tôle d'acier s'appliquent sur des parties étagées en forme d'épaulements (50) du corps en métal léger (34a).

**15.** Barre conductrice selon l'une des revendications 1 à 14, **caractérisée en ce que** les surfaces latérales (21) du profilé de support (20) ou de leurs brides (26, 30) sont approximativement alignées avec la surface libre (38) du composant profilé (36, 46).

**16.** Barre conductrice selon l'une des revendications 1 à 12, **caractérisée par** au moins un insert (36a), qui est inséré dans le corps en métal léger (34b) et est formé d'un métal ayant une résistance accrue, notamment au moins une bande d'acier, qui forme au moins par endroits, au niveau des bords longitudinaux (58) du corps en métal léger, une surface libre (57), qui à l'état monté est approximativement contiguë à la barre conductrice (20).

**17.** Barre conductrice selon la revendication 15, **caractérisée par** une bande d'acier (36a), qui est insérée dans le corps en métal léger (34b), comporte des passages (54) et sur la surface de laquelle s'engage un tronçon (56) de section transversale du corps en métal léger de telle sorte que des rubans visibles (57) de la bande d'acier subsistent sur les bords longitudinaux (58) du tronçon de section transversale.

**18.** Barre conductrice selon la revendication 1, **caractérisée par** une barre conductrice (20) formée d'un matériau ferreux et possédant une section transversale en forme de C ou de I qui est équipée complémentairement d'un profilé de guidage (22, 22a à 22d).

**19.** Barre conductrice selon la revendication 19, **caractérisée en ce que** les barres conductrices (20) sont réalisées en un acier pour voies électriques avec la conformation de section transversale nominale A selon DIN 43156.

**20.** Procédé pour fabriquer une barre conductrice selon l'une des revendications 1 à 17, selon lequel le profilé de guidage (22, 22a à 22c) est inséré à force dans la rainure de flanc (32), et le corps en métal léger (34, 34a) est déformé d'une manière limitée au niveau de sa surface de flanc (35).

**21.** Procédé selon la revendication 20, **caractérisé en ce que** le profilé (42, 42a, 43) du corps en métal léger (34, 34a) est déformé.

**22.** Procédé selon la revendication 20 ou 21, **caractérisé en ce qu'**une liaison soudée à froid est établie entre la barre conductrice (20) formée d'acier doux et le corps en métal léger (34, 34a).

**23.** Procédé selon l'une des revendications 20 à 22, **caractérisé en ce que** le corps en métal léger (34, 34a) est élargi dans la zone de sa rainure de détente (44) ou de sa fente longitudinale (44a) avant le montage.

EP 1 000 675 B1

Fig.3

Fig.2

Fig.1

10

Fig.4   Fig.5

Fig.6

Fig.7

Fig.8